(19)

**Europäisches Patentamt**
**European Patent Office**
**Office européen des brevets**

(11) **EP 4 783 582 A1**

(12) **EUROPEAN PATENT APPLICATION**
published in accordance with Art. 153(4) EPC

(43) Date of publication:
**29.07.2026 Bulletin 2026/31**

(21) Application number: **24802152.9**

(22) Date of filing: **19.09.2024**

(51) International Patent Classification (IPC):
**H04N 19/30** (2014.01)       **H04N 19/63** (2014.01)

(86) International application number:
**PCT/CN2024/119542**

(87) International publication number:
**WO 2025/061066 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.09.2023   CN 202311211995**

(71) Applicant: **Chengdu Sobey Digital Technology
Co., Ltd
Chengdu, Sichuan 610041 (CN)**

(72) Inventors:
• **ZHANG, Jinsha
Chengdu
Sichuan 610000 (CN)**
• **ZHENG, Jianhong
Chengdu
Sichuan 610000 (CN)**

(74) Representative: **Murgitroyd & Company
165-169 Scotland Street
Glasgow G5 8PL (GB)**

(54) **IMPROVED ENCODING METHOD FOR ENHANCEMENT LAYER IN VIDEO IMAGE LAYERING AND ENCODING**

(57)    The present disclosure relates to the technical field of video image coding, and discloses an improved coding method for an enhancement layer of layered video image coding, which includes the following steps: S1. image layering: performing two-dimensional wavelet transform on an input YUV 4:2:2 image, decomposing the image into four subbands LL, LH, HL and HH, and constructing an enhancement layer based on the four subbands LL, LH, HL and HH; wherein LL represents a low-frequency subband, LH represents a horizontal high-frequency subband, HL represents a vertical high-frequency subband, and HH represents a diagonal high-frequency subband; and S2. enhancement layer data rearrangement: rearranging the positions of the enhancement layer data. The present disclosure solves the problems existing in the existing technology that the compression rate needs to be further increased and the image coding quality needs to be further improved.

FIG. 2

EP 4 783 582 A1

**Description**

**TECHNICAL FIELD**

The present disclosure relates to the technical field of video image coding, and specifically to an improved coding method for an enhancement layer of layered video image coding.

**BACKGROUND**

Layered video image coding refers to transforming and separating a video image into a base layer and an enhancement layer, and then coding these two layer respectively. There are many possible ways of the scalable transform, including a wavelet transform. Chinese Patent Application No. 202111596903.7 entitled "LOW-COMPLEXITY CODING METHOD FOR HIGH-FREQUENCY COEFFICIENT OF VIDEO IMAGE WAVELET TRANSFORM" describes a coding method for high-frequency coefficients of video images after wavelet transform, which achieves high compression rate and maintains low complexity.

However, there are still defects as follows: the compression rate needs to be further increased, and the image coding quality needs to be further improved.

**SUMMARY**

To overcome the defects in the existing technology, the present disclosure provides an improved coding method for an enhancement layer of layered video image coding, which solves the problems existing in the existing technology that the compression rate needs to be further increased and the image coding quality needs to be further improved.

The technical solution used by the present disclosure to solve the above technical problems is as follows.

An improved coding method for an enhancement layer of layered video image coding includes the following steps:

S1. image layering: performing two-dimensional wavelet transform on an input YUV 4:2:2 image, decomposing the image into four subbands LL, LH, HL and HH, and constructing an enhancement layer based on the four subbands LL, LH, HL and HH; where LL represents a low-frequency subband, LH represents a horizontal high-frequency subband, HL represents a vertical high-frequency subband, and HH represents a diagonal high-frequency subband; and

S2. enhancement layer data rearrangement: rearranging the positions of the enhancement layer data.

As a preferred technical solution, the step S2 includes the following steps:

S21. slice rearrangement: dividing the enhancement layer data into slices, where each slice contains data of 12 subbands LL-Y, LL-U, LL-V, LH-Y, LH-U, LH-V, HL-Y, HL-U, HL-V, HH-Y, HH-U, HH-V in a corresponding row, and rearranging positions of data in the slice arrangement, where Y represents brightness, U represents chroma of red color difference, and V represents chroma of blue color difference;

S22. block and block group division: dividing each slice into a plurality of blocks, and grouping the plurality of blocks into a block group; where each block group contains a same number M of blocks; and

S23. in-block coefficient rearrangement: rearranging the coefficients in each block.

As a preferred technical solution, the improved coding method further includes the following steps:

S3. Hadamard transform: performing 2*2 Hadamard transform on the rearranged coefficients, where every 4 adjacent coefficients form a group, and the transform formula is as follows:

$$[Y_0, Y_1, Y_2, Y_3] = \frac{1}{2} \times [X_0, X_1, X_2, X_3] \times \begin{bmatrix} 1 & 1 & 1 & 1 \\ 1 & -1 & 1 & -1 \\ 1 & 1 & -1 & -1 \\ 1 & -1 & -1 & 1 \end{bmatrix}$$

where $Y_0$, $Y_1$, $Y_2$ and $Y_3$ represent 4 coefficients in a group of coefficients from front to back after the transform, and $X_0$, $X_1$, $X_2$ and $X_3$ represent 4 coefficients in a group of coefficients before the transform.

As a preferred technical solution, the improved coding method includes the following steps:

S4. quantization: quantizing the coefficients after the Hadamard transform; where, for each slice, there is a unified slice quantization parameter slice_qp; the quantization bias is qp_bias, qp=slice_qp+qp_bias; where qp represents the actual quantization parameter.

As a preferred technical solution, the qp_bias of three subbands LL-Y, LL-U and LL-V is 0; the qp_bias of six subbands LH-Y, LH-U, LH-V, HL-Y, HL-U and HL-V is 8; and the qp_bias of three subbands HH-Y, HH-U and HH-V is 16.

As a preferred technical solution, the improved coding method includes the following steps:

S5. coefficient coding: performing coefficient coding on the quantized coefficients.

As a preferred technical solution, the step S5 includes the following steps:

S51. setting a block group coding stream structure: the block group is a basic unit of coefficient coding, and a coding stream of one block group includes a block group head, a Z coding group, a P coding group and an S coding group; the block group head is 2 bytes and stores a byte count of the coding stream of the block group; the Z coding group stores a block coding mode, a coefficient group non-zero flag array, a variable-length code flag array and a 0001-pattern fixed-length code stream; the P coding group stores a variable-length code prefix stream; and the S coding group stores a variable-length code suffix stream.

As a preferred technical solution, the step S5 includes the following steps:

S52. setting the block coding mode: defining five block coding modes for each block, selecting the mode with the shortest block code length for coding each block, where the block coding mode code is a variable-length code, and the five block coding modes are respectively as follows:

block coding mode 0: the block coding mode code is 0 with a bit count of 1, representing that all coefficients of this block are 0;

block coding mode 1: the block coding mode code is 10 with a bit count of 2, representing that there are non-0 coefficients in this block, a multi-level coefficient group non-zero flag array is used for description, and the coefficients are coded using both the 0001-pattern fixed-length code and a first set of variable-length codes;

block coding mode 2: the block coding mode code is 110 with a bit count of 3, representing that there are non-0 coefficients in this block, only a 4-coefficient group non-zero flag array is used for description, and the coefficients are coded using both the 0001-pattern fixed-length code and a first set of variable-length codes; block coding mode 3: the block coding mode code is 1110 with a bit count of 4, representing that there are non-0 coefficients in this block, a coefficient group non-zero flag array is not used for description, and the coefficients are coded only using a first set of variable-length codes; and

block coding mode 4: the block coding mode code is 1111 with a bit count of 4, representing that there are non-0 coefficients in this block, a coefficient group non-zero flag array is not used for description, and the coefficients are coded only using a second set of variable-length codes.

As a preferred technical solution, in the step S52, the coefficient group non-zero flag array is divided into three levels, 64-coefficient group, 16-coefficient group and 4-coefficient group: if all 64 coefficients belonging to the 64-coefficient group are 0, the corresponding 64-coefficient group non-zero flag array is 0, otherwise, the non-zero flag array is 1; if all 16 coefficients belonging to the 16-coefficient group are 0, the corresponding 16-coefficient group non-zero flag array is 0, otherwise, the non-zero flag array is 1; and if all 4 coefficients belonging to the 4-coefficient group are 0, the corresponding 4-coefficient group non-zero flag array is 0, otherwise the non-zero flag array is 1.

As a preferable technical solution, in the step S52, for the block coding mode 1 and the block coding mode 2, if there are non-zero coefficients in one 4-coefficient group, two cases are as follows: if the 4 coefficients are composed of three 0 and one 1 or one -1, which is called the 0001-pattern 4-coefficient group, and the fixed-length code is used, and the fixed-length code stream is recorded in the Z coding group; and if the 4 coefficients are not composed of three 0 and one 1 or one -1, the variable-length code is used, and the prefix stream of the variable-length code is recorded in the P coding group, and the suffix stream of the variable-length code is recorded in the S coding group.

Compared with the existing technology, the present disclosure has the following beneficial effects.

(1) The comprehensive techniques used in the present disclosure, such as rearrangement, Hadamard transform, quantization and coefficient coding, better conform to the data characteristics and probability model of the wavelet high-frequency subband, thereby achieving a higher compression rate and better picture quality at the same bit rate.

(2) Compared with the traditional method using DCT transform and context adaptive coding, the present disclosure has lower complexity and higher parallelism, which is conducive to implementation on CPU/GPU/FPGA/ASIC platforms.

**BRIEF DESCRIPTION OF DRAWINGS**

FIG. 1 is a schematic diagram of image layering;
FIG. 2 is a schematic diagram of slice arrangement;
FIG. 3 is a schematic diagram of a slice divided into blocks and block groups;
FIG. 4 is a schematic diagram of the rearrangement of coefficients in a 16*16 block;
FIG. 5 is a schematic diagram of the rearrangement of coefficients in a 32*8 block;
FIG. 6 is a schematic diagram of the rearrangement of coefficients in a 16*4 block;
FIG. 7 is a schematic diagram of a block group stream structure;
FIG. 8 is a schematic diagram of non-zero coefficients in a 16*16 block; and
FIG. 9 is a schematic diagram of a multi-level non-zero flag description.

**DETAILED DESCRIPTION**

The present disclosure is further described in detail below with reference to the embodiments and drawings; however, the embodiments of the present disclosure are not limited thereto.

Embodiment 1

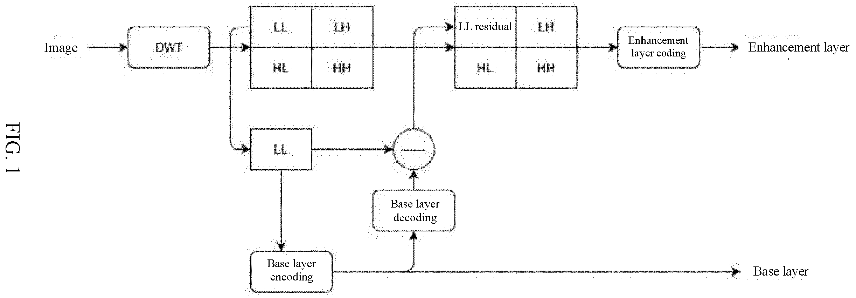

As shown in FIGs. 1 to 9, the present disclosure has made several improvements on the basis of the existing technology. The specific coding method for the enhancement layer is improved, so that the compression rate is further improved, and better image coding quality is obtained.
The present disclosure is implemented by using the following technical solutions:

S1. Image layering:
An input YUV 4:2:2 image is subjected to two-dimensional wavelet transform, and the used wavelet function is the Le Gall 5/3 integer wavelet. After one horizontal wavelet transform and one vertical wavelet transform, the image is decomposed into four subbands, LL, LH, HL and HH, where LL is a low-frequency subband, and LH, HL and HH are high-frequency subbands. LL, serving as a base layer, is subjected to base layer encoding first and then base layer decoding, and an LL residual is obtained by subtracting the LL subjected to base layer decoding pixel by pixel from the original LL. The LL residual replaces LL pixel by pixel, and together with LH, HL and HH, forms an enhancement layer for the next enhancement layer coding. The image layering process is shown in FIG. 1.
S2. Enhancement layer data rearrangement:

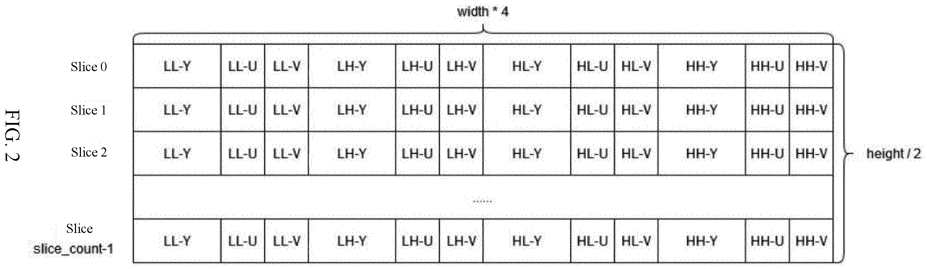

S21. slice rearrangement:
The enhancement layer data is divided into slices, and each slice contains data of 12 subbands LL-Y, LL-U, LL-V, LH-Y, LH-U, LH-V, HL-Y, HL-U, HL-V, HH-Y, HH-U, HH-V in a corresponding row. The enhancement layer image width is set to width, and the image height is set to height. Then the slice width slice_width=width*4, the allowed values of the slice height slice_height are 4, 8 or 16, and the count of slices into which the enhancement layer image is divided slice_count=height/2/slice_height. The slice arrangement is shown in FIG. 2.
S22. block and block group division:
Block division is performed in each slice. When the slice height is 16, the allowed block size is 16*16; when the slice height is 8, the allowed block size is 32*8; and when the slice height is 4, the allowed block size is 16*4.

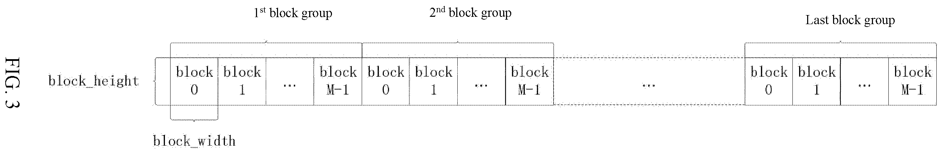

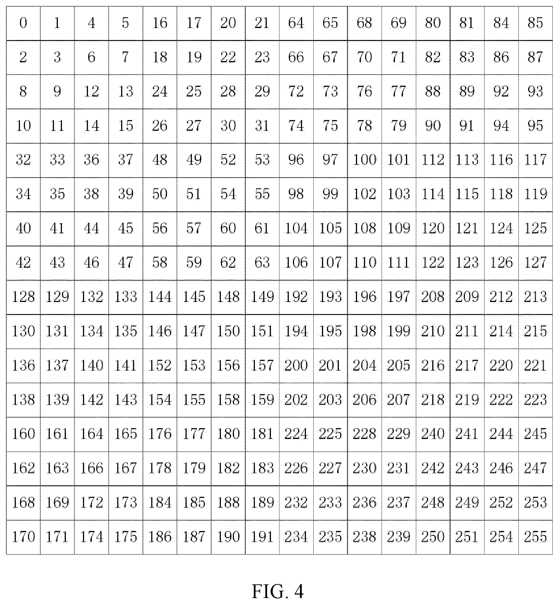

A plurality of blocks form a block group. Each block group contains a same number M of blocks, and the allowed value range of M is [1,60].
The blocks and block groups contained in one slice are shown in FIG. 3.
S23. in-block coefficient rearrangement:
The rearrangement of coefficients in a 16*16 block is shown in FIG. 4.
In FIG. 4, the 16*16 block can be divided into four layers:

A first layer, the 16*16 block can be divided into four 8*8 blocks arranged in the order of upper left, upper right, lower left and lower right.
A second layer, each 8*8 block can be divided into four 4*4 blocks arranged in the order of upper left, upper right, lower left and lower right.
A third layer, each 4*4 block can be divided into four 2*2 blocks arranged in the order of upper left, upper right, lower left and lower right.

A fourth layer, each 2*2 block contains 4 coefficients arranged in the order of upper left, upper right, lower left and lower right.

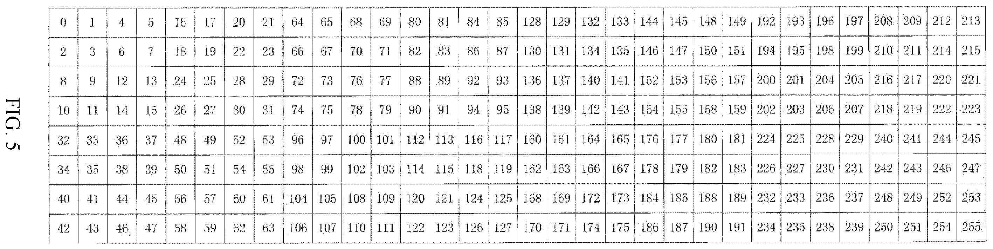

The rearrangement of coefficients in a 32*8 block is shown in FIG. 5.

In FIG. 5, the 32*8 block can be divided into four layers:

A first layer, the 32*8 block can be divided into four 8*8 blocks arranged from left to right.

A second layer, each 8*8 block can be divided into four 4*4 blocks arranged in the order of upper left, upper right, lower left and lower right. A third layer, each 4*4 block can be divided into four 2*2 blocks arranged in the order of upper left, upper right, lower left and lower right. A fourth layer, each 2*2 block contains 4 coefficients arranged in the order of upper left, upper right, lower left and lower right.

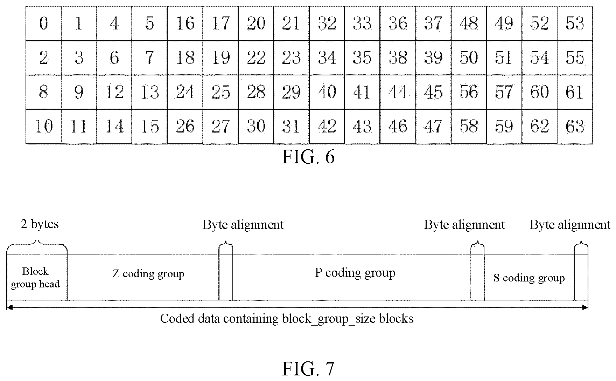

The rearrangement of coefficients in a 16*4 block is shown in FIG. 6.

In FIG. 6, the 16*4 block can be divided into three layers:

A first layer, the 16*4 block can be divided into four 4*4 blocks arranged from left to right.

A second layer, each 4*4 block can be divided into four 2*2 blocks arranged in the order of upper left, upper right, lower left and lower right.

A third layer, each 2*2 block contains 4 coefficients arranged in the order of upper left, upper right, lower left and lower right.

S3. Hadamard transform:

The rearranged coefficients are subjected to 2*2 Hadamard transform, and every 4 adjacent coefficients form a group. The transform formula is as follows:

$$[Y_0, Y_1, Y_2, Y_3] = \frac{1}{2} \times [X_0, X_1, X_2, X_3] \times \begin{bmatrix} 1 & 1 & 1 & 1 \\ 1 & -1 & 1 & -1 \\ 1 & 1 & -1 & -1 \\ 1 & -1 & -1 & 1 \end{bmatrix}$$

S4. Quantization:

The coefficients after the Hadamard transform are subjected to quantization. The allowed value range of the quantization parameter qp is [0,87] using an 88-level quantization table. The relationship between the quantization parameter qp and the quantization step qstep is shown in Table 1.

Table 1. Relationship between quantization parameter qp and quantization step qstep

| qp | qstep | qp | qstep | qp | qstep | qp | qstep |
|----|-------|----|-------|----|-------|----|-------|
| 0 | 1 | 22 | 7 | 44 | 48 | 66 | 320 |
| 1 | 1.125 | 23 | 7.5 | 45 | 52 | 67 | 352 |
| 2 | 1.25 | 24 | 8 | 46 | 56 | 68 | 384 |
| 3 | 1.375 | 25 | 9 | 47 | 60 | 69 | 416 |
| 4 | 1.5 | 26 | 10 | 48 | 64 | 70 | 448 |
| 5 | 1.625 | 27 | 11 | 49 | 72 | 71 | 480 |
| 6 | 1.75 | 28 | 12 | 50 | 80 | 72 | 512 |
| 7 | 1.875 | 29 | 13 | 51 | 88 | 73 | 576 |
| 8 | 2 | 30 | 14 | 52 | 96 | 74 | 640 |
| 9 | 2.25 | 31 | 15 | 53 | 104 | 75 | 704 |
| 10 | 2.5 | 32 | 16 | 54 | 112 | 76 | 768 |
| 11 | 2.75 | 33 | 18 | 55 | 120 | 77 | 832 |

(continued)

| qp | qstep | qp | qstep | qp | qstep | qp | qstep |
|----|-------|----|-------|----|-------|----|-------|
| 12 | 3 | 34 | 20 | 56 | 128 | 78 | 896 |
| 13 | 3.25 | 35 | 22 | 57 | 144 | 79 | 960 |
| 14 | 3.5 | 36 | 24 | 58 | 160 | 80 | 1024 |
| 15 | 3.75 | 37 | 26 | 59 | 176 | 81 | 1152 |
| 16 | 4 | 38 | 28 | 60 | 192 | 82 | 1280 |
| 17 | 4.5 | 39 | 30 | 61 | 208 | 83 | 1408 |
| 18 | 5 | 40 | 32 | 62 | 224 | 84 | 1536 |
| 19 | 5.5 | 41 | 36 | 63 | 240 | 85 | 1664 |
| 20 | 6 | 42 | 40 | 64 | 256 | 86 | 1792 |
| 21 | 6.5 | 43 | 44 | 65 | 288 | 87 | 1920 |

For each slice, there is a unified slice quantization parameter slice_qp. The quantization weights for each subband in a slice are different, and there is a quantization bias qp_bias relative to the slice quantization parameter. Quantization weight means: different quantization parameters qp are used according to the different importance of subbands, more important subbands use finer quantization steps, i.e., smaller qp; and unimportant subbands use coarser quantization steps, i.e., larger qp. Quantization offset refers to the deviation of the different set subbands qp. The qp_bias of three subbands LL-Y, LL-U and LL-V is 0; the qp_bias of six subbands LH-Y, LH-U, LH-V, HL-Y, HL-U and HL-V is 8; and the qp_bias of three subbands HH-Y, HH-U and HH-V is 16.

The quantized pseudo code is shown in Table 2.

Table 2. Quantized pseudo code table

| qp | qstep | qp | qstep | qp | qstep | qp | qstep |
|----|-------|----|-------|----|-------|----|-------|
| 0 | 1 | 22 | 7 | 44 | 48 | 66 | 320 |
| 1 | 1.125 | 23 | 7.5 | 45 | 52 | 67 | 352 |
| 2 | 1.25 | 24 | 8 | 46 | 56 | 68 | 384 |
| 3 | 1.375 | 25 | 9 | 47 | 60 | 69 | 416 |
| 4 | 1.5 | 26 | 10 | 48 | 64 | 70 | 448 |
| 5 | 1.625 | 27 | 11 | 49 | 72 | 71 | 480 |
| 6 | 1.75 | 28 | 12 | 50 | 80 | 72 | 512 |
| 7 | 1.875 | 29 | 13 | 51 | 88 | 73 | 576 |
| 8 | 2 | 30 | 14 | 52 | 96 | 74 | 640 |
| 9 | 2.25 | 31 | 15 | 53 | 104 | 75 | 704 |
| 10 | 2.5 | 32 | 16 | 54 | 112 | 76 | 768 |
| 11 | 2. 75 | 33 | 18 | 55 | 120 | 77 | 832 |
| 12 | 3 | 34 | 20 | 56 | 128 | 78 | 896 |
| 13 | 3.25 | 35 | 22 | 57 | 144 | 79 | 960 |
| 14 | 3.5 | 36 | 24 | 58 | 160 | 80 | 1024 |
| 15 | 3.75 | 37 | 26 | 59 | 176 | 81 | 1152 |
| 16 | 4 | 38 | 28 | 60 | 192 | 82 | 1280 |
| 17 | 4.5 | 39 | 30 | 61 | 208 | 83 | 1408 |
| 18 | 5 | 40 | 32 | 62 | 224 | 84 | 1536 |
| 19 | 5.5 | 41 | 36 | 63 | 240 | 85 | 1664 |

(continued)

| qp | qstep | qp | qstep | qp | qstep | qp | qstep |
|----|-------|----|-------|----|-------|----|-------|
| 20 | 6 | 42 | 40 | 64 | 256 | 86 | 1792 |
| 21 | 6.5 | 43 | 44 | 65 | 288 | 87 | 1920 |

S5. Coefficient coding:

S51. block group coding stream structure:

The quantized coefficients are subjected to coefficient coding, the block group is a basic unit of coefficient coding. The coding stream of one block group consists of a block group head, a Z coding group, a P coding group and an S coding group. The block group head is 2 bytes and stores a byte count of the coding stream of the block group. The Z coding group stores a block coding mode, a coefficient group non-zero flag array, a variable-length code flag array and a 0001-pattern fixed-length code stream. The P coding group stores a variable-length code prefix stream. The S coding group stores a variable-length code suffix stream. The block group stream structure is shown in FIG. 7.

S52. block coding mode:

Since the coefficient distribution probability of each block is very different, 5 coding modes are defined for each block, and the mode with the shortest code length should be selected for coding the block. The block coding mode code is a variable-length code, the meaning of which is shown in Table 3.

Table 3. Block coding mode table

| Block coding mode code block_mode_code | Bit count | Block coding mode BlockMode | Meaning |
|---|---|---|---|
| 0 | 1 | 0 | All coefficients of this block are 0 |
| 10 | 2 | 1 | There are non-0 coefficients in this block, a multi-level coefficient group non-zero flag array is used for description, and the coefficients are coded using both the 0001-pattern fixed-length code and a $1^{st}$ set of variable-length codes |
| 110 | 3 | 2 | There are non-0 coefficients in this block, only a 4-coefficient group non-zero flag array is used for description, and the coefficients are coded using both the 0001-pattern fixed-length code and a $1^{st}$ set of variable-length codes |
| 1110 | 4 | 3 | There are non-0 coefficients in this block, a coefficient group non-zero flag array is not used for description, and the coefficients are coded only using a $1^{st}$ set of variable-length codes |
| 1111 | 4 | 4 | There are non-0 coefficients in this block, a coefficient group non-zero flag array is not used for description, and the coefficients are coded only using a $2^{nd}$ set of variable-length codes |

Coefficient group non-zero flag array:

The coefficient group non-zero flag array is divided into three levels, 64-coefficient group, 16-coefficient group and 4-coefficient group. If all 64 coefficients belonging to the 64-coefficient group are 0, the corresponding 64-coefficient group non-zero flag array is 0, otherwise, the non-zero flag array is 1; if all 16 coefficients belonging to the 16-coefficient group are 0, the corresponding 16-coefficient group non-zero flag array is 0, otherwise, the non-zero flag array is 1; and if all 4 coefficients belonging to the 4-coefficient group are 0, the corresponding 4-coefficient group non-zero flag array is 0, otherwise the non-zero flag array is 1.

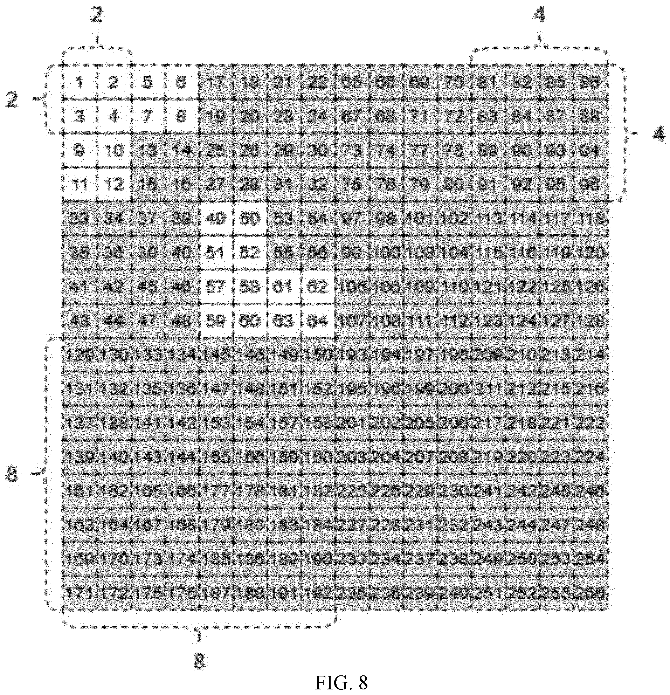

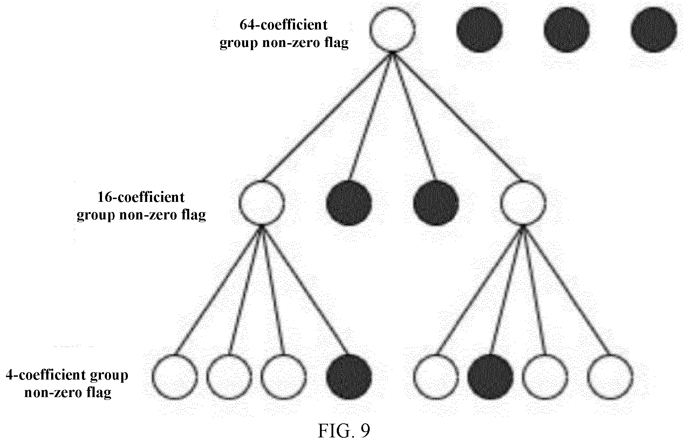

The block coding mode 1 is described using a multi-level coefficient group non-zero flag array. If an area at a higher level is already represented as all-0, the non-zero flag array at a lower level in this area does not need to be described again, so that the count of coded bits is saved. The block coding mode 1 is suitable for the case where the non-zero coefficients in a block are very sparse. In FIG. 8, black squares represent that the coefficient is 0, and white squares represent non-zero coefficients. In FIG. 9, black circles represent all zero nodes (all 0 coefficients in this area), and white circles represent non-zero nodes.

The block coding mode 2 is described using a 4-coefficient group non-zero flag array rather than a multi-level coefficient group non-zero flag array.

The block coding mode 2 is suitable for the case where non-zero coefficients in a block are generally sparse.

The block coding mode 3 and the block coding mode 4 are not described using any non-zero flag array, and are suitable for the case where non-zero coefficients in a block are not sparse.

Variable-length code flag array and 0001-pattern fixed-length code:

For the block coding modes 1 and 2, if there are non-zero coefficients in one 4-coefficient group, two cases are as follows: if the 4 coefficients are composed of three 0 and one $\pm 1$, which is called the 0001-pattern 4-coefficient group, and the fixed-length code is used, and the fixed-length code stream is recorded in the Z coding group; and if the 4 coefficients are not composed of three 0 and one $\pm 1$, the variable-length code is used, and the prefix and suffix streams of the variable-length code are recorded in the P coding group and the S coding group respectively. For each 4-coefficient group with non-zero coefficients, the variable-length code flag array records the above two cases in turn.

There are 8 possible 0001-patterns, represented by 3-bit fixed-length codes, as shown in Table 4.

Table 4. 0001-pattern table

| 0001-pattern code in 4-coefficient group | 4-coefficient group value |
| --- | --- |
| 000 | 1, 0, 0, 0 |
| 001 | -1, 0, 0, 0 |
| 010 | 0, 1, 0, 0 |
| 011 | 0, -1, 0, 0 |
| 100 | 0, 0, 1, 0 |
| 101 | 0, 0, -1, 0 |
| 110 | 0, 0, 0, 1 |
| 111 | 0, 0, 0, -1 |

For the block coding modes 3 and 4, there is no variable-length code flag array and 0001-pattern fixed-length code, and all coefficients in the block are variable-length coded.

The first set of variable-length codes:
The 4-coefficient group that uses a variable-length code for the block coding modes 1 and 2 as well as all coefficients of the block coding mode 3 use the first set of variable-length codes. The pseudo codes for the first set of variable-length codes are described in Table 5.

Table 5. Pseudo code table for first set of variable-length codes

| Pseudo codes for first set of variable-length codes |
| --- |
| if (coeff = 0) |
| PutBit(P_stream, 1): |
| else if (coeff == -1) |
| PutBit (P_stream, 01) ; |
| else if (coeff == 1) |
| PutBit(P_stream, 001): |
| else if (coeff == -2) |
| PutBit(P_stream, 0001); |
| else if (coeff == 2) |
| PutBit(P_stream, 00001): |
| else { |
| prefix_0_count = Log2(abs(coeff) - 2) + 5: |

(continued)

| |
|---|
| for (i = 0; i < prefix_0_count; i++) |
|    PutBit(P_stream, 0): |
| PutBit(P_stream, 1); |
| suffix_value = abs(coeff) - 2 - (1 << (prefix_0_count - 5)); |
| for (i = 0; i < prefix_0_Count - 5; i++) |
|    PutBit(S_stream, suffix_value >> (prefix_0_Count - 6 - i) & 1); |
| if (coeff > 0) |
|    PutBit(S_stream, 0); |
| else if (coeff < 0) |
|    PutBit(S_stream, 1); |
| } |

The codewords for the first set of variable-length codes from -9 to +9 are shown in Table 6.

Table 6. Codeword table for first set of variable-length codes

| Prefix codeword | Suffix codeword | Coefficient value |
|---|---|---|
| 1 | No | 0 |
| 01 | No | -1 |
| 001 | No | 1 |
| 0001 | No | -2 |
| 00001 | No | 2 |
| 000001 | 1 | -3 |
| 000001 | 0 | 3 |
| 0000001 | 01 | -4 |
| 0000001 | 00 | 4 |
| 0000001 | 11 | -5 |
| 0000001 | 10 | 5 |
| 00000001 | 001 | -6 |
| 00000001 | 000 | 6 |
| 00000001 | 011 | -7 |
| 00000001 | 010 | 7 |
| 00000001 | 101 | -8 |
| 00000001 | 100 | 8 |
| 00000001 | 111 | -9 |
| 00000001 | 110 | 9 |

The second set of variable-length codes:
For all coefficients of the block coding mode 4, a second set of variable-length codes are used. The codewords for the second set of variable-length codes are equivalent to the 0-order exponential-Golomb coding, and the pseudo codes are described in Table 7.

Table 7. Pseudo code table for second set of variable-length codes

| |
|---|
| Pseudo codes for second set of variable-length codes |

(continued)

| if (coeff = 0) |
| --- |
|    PutBit (P_stream, 1); |
| else { |
|    prefix_0_count = Log2(abs(coeff)) + 1: |
|    for (i = 0; i < prefix 0_count: i++) |
|      PutBit(P_stream, 0); |
|    PutBit (P_stream, 1): |
|    suffix_value = abs(coeff) - (1 << (prefix_0_count - 1)); |
|    for (i = 0; i < prefix_0_Count - 1: i++) |
|      PutBit(S_stream, suffix_value >> (prefix_0_Count - 2 - i) & 1); |
|    if (coeff > 0) |
|      PutBit(S_stream, 0): |
|    else if (coeff < 0) |
|      PutBit(S_stream, 1): |
| } |

The codewords for the second set of variable-length codes from -9 to +9 are shown in Table 8.

Table 8. Codeword table for second set of variable-length codes

| Prefix codeword | Suffix codeword | Coefficient value |
| --- | --- | --- |
| 1 | No | 0 |
| 01 | 1 | -1 |
| 01 | 0 | 1 |
| 001 | 01 | -2 |
| 001 | 00 | 2 |
| 001 | 11 | -3 |
| 001 | 10 | 3 |
| 0001 | 001 | -4 |
| 0001 | 000 | 4 |
| 0001 | 011 | -5 |
| 0001 | 010 | 5 |
| 0001 | 101 | -6 |
| 0001 | 100 | 6 |
| 0001 | 111 | -7 |
| 0001 | 110 | 7 |
| 00001 | 0001 | -8 |
| 00001 | 0000 | 8 |
| 00001 | 0011 | -9 |
| 00001 | 0010 | 9 |

As described above, the present disclosure can be preferably implemented.

All features disclosed in all embodiments in this specification, or steps in all methods or processes implicitly disclosed, except for mutually exclusive features and/or steps, can be combined and/or expanded or replaced in any manner.

The above descriptions are merely preferred embodiments of the present disclosure, and are not intended to limit the present disclosure in any form. According to the technical essence of the present disclosure, any simple modification, equivalent replacement and improvement made within the spirit and principles of the present disclosure to the above embodiments still fall within the protection scope of the technical solution of the present disclosure.

**Claims**

1. An improved coding method for an enhancement layer of layered video image coding, comprising the following steps:

S1. image layering: performing two-dimensional wavelet transform on an input YUV 4:2:2 image, decomposing the image into four subbands LL, LH, HL and HH, and constructing an enhancement layer based on the four subbands LL, LH, HL and HH; wherein LL represents a low-frequency subband, LH represents a horizontal high-frequency subband, HL represents a vertical high-frequency subband, and HH represents a diagonal high-frequency subband; LL, serving as a base layer, is subjected to base layer encoding first and then base layer decoding, an LL residual is obtained by subtracting the LL subjected to base layer decoding pixel by pixel from the original LL, and the LL residual replaces LL pixel by pixel, and together with LH, HL and HH, forms an enhancement layer;

S2. enhancement layer data rearrangement: rearranging the positions of the enhancement layer data; wherein the step S2 comprises the following steps:

S21. slice rearrangement: dividing the enhancement layer data into slices, wherein each slice contains data of 12 subbands LL-Y, LL-U, LL-V, LH-Y, LH-U, LH-V, HL-Y, HL-U, HL-V, HH-Y, HH-U, HH-V in a corresponding row, and rearranging positions of data in the slice arrangement, wherein Y represents brightness, U represents chroma of red color difference, and V represents chroma of blue color difference;

S22. block and block group division: dividing each slice into a plurality of blocks, and grouping the plurality of blocks into a block group; wherein each block group contains a same number M of blocks; and

S23. in-block coefficient rearrangement: rearranging the coefficients in each block;

S3. Hadamard transform: performing 2*2 Hadamard transform on the rearranged coefficients, wherein every 4 adjacent coefficients form a group, and the transform formula is as follows:

$$[Y_0, Y_1, Y_2, Y_3] = \frac{1}{2} \times [X_0, X_1, X_2, X_3] \times \begin{bmatrix} 1 & 1 & 1 & 1 \\ 1 & -1 & 1 & -1 \\ 1 & 1 & -1 & -1 \\ 1 & -1 & -1 & 1 \end{bmatrix};$$

wherein $Y_0$, $Y_1$, $Y_2$ and $Y_3$ represent 4 coefficients in a group of coefficients from front to back after the transform, and $X_0$, $X_1$, $X_2$ and $X_3$ represent 4 coefficients in a group of coefficients before the transform;

S4. quantization: quantizing the coefficients after the Hadamard transform; wherein, for each slice, there is a unified slice quantization parameter slice_qp; the quantization bias is qp_bias, qp=slice_qp+qp_bias; wherein qp represents the actual quantization parameter;

the qp_bias of three subbands LL-Y, LL-U and LL-V is 0; the qp_bias of six subbands LH-Y, LH-U, LH-V, HL-Y, HL-U and HL-V is 8; and the qp_bias of three subbands HH-Y, HH-U and HH-V is 16;

S5. coefficient coding: performing coefficient coding on the quantized coefficients, wherein the step S5 comprises the following steps:

S51. setting a block group coding stream structure: the block group is a basic unit of coefficient coding, and a coding stream of one block group comprises a block group head, a Z coding group, a P coding group and an S coding group; the block group head is 2 bytes and stores a byte count of the coding stream of the block group; the Z coding group stores a block coding mode, a coefficient group non-zero flag array, a variable-length code flag array and a 0001-pattern fixed-length code stream; the P coding group stores a variable-length code prefix stream; and the S coding group stores a variable-length code suffix stream;

S52. setting the block coding mode: defining five block coding modes for each block, selecting the mode with the shortest block code length for coding each block, wherein the block coding mode code is a variable-length code, and the five block coding modes are respectively as follows:

block coding mode 0: the block coding mode code is 0 with a bit count of 1, representing that all coefficients of this block are 0;

block coding mode 1: the block coding mode code is 10 with a bit count of 2, representing that there are non-0 coefficients in this block, a multi-level coefficient group non-zero flag array is used for description, and the coefficients are coded using both the 0001-pattern fixed-length code and a first set of variable-length codes;

block coding mode 2: the block coding mode code is 110 with a bit count of 3, representing that there are non-0 coefficients in this block, a 4-coefficient group non-zero flag array is used for description, and the coefficients are coded using both the 0001-pattern fixed-length code and a first set of variable-length codes;

block coding mode 3: the block coding mode code is 1110 with a bit count of 4, representing that there are non-0 coefficients in this block, a coefficient group non-zero flag array is not used for description, and the coefficients are coded only using a first set of variable-length codes; and

block coding mode 4: the block coding mode code is 1111 with a bit count of 4, representing that there are non-0 coefficients in this block, a coefficient group non-zero flag array is not used for description, and the coefficients are coded only using a second set of variable-length codes.

2. The improved coding method for the enhancement layer of layered video image coding according to claim 1, wherein in the step S52, the coefficient group non-zero flag array is divided into three levels, i.e., 64-coefficient group, 16-coefficient group and 4-coefficient group: if all 64 coefficients belonging to the 64-coefficient group are 0, the corresponding 64-coefficient group non-zero flag array is 0, otherwise, the non-zero flag array is 1; if all 16 coefficients belonging to the 16-coefficient group are 0, the corresponding 16-coefficient group non-zero flag array is 0, otherwise, the non-zero flag array is 1; and if all 4 coefficients belonging to the 4-coefficient group are 0, the corresponding 4-coefficient group non-zero flag array is 0, otherwise the non-zero flag array is 1.

3. The improved coding method for the enhancement layer of layered video image coding according to claim 1 or 2, wherein in the step S52, for the block coding mode 1 and the block coding mode 2, if there are non-zero coefficients in one 4-coefficient group, two cases are as follows: if the 4 coefficients are composed of three 0 and one 1 or one -1, which is called the 0001-pattern 4-coefficient group, and the fixed-length code is used, and the fixed-length code stream is recorded in the Z coding group; and if the 4 coefficients are not composed of three 0 and one 1 or one -1, the variable-length code is used, and the prefix stream of the variable-length code is recorded in the P coding group, and the suffix stream of the variable-length code is recorded in the S coding group.

FIG. 1

| | | | | | | | | | | | | |
|---|---|---|---|---|---|---|---|---|---|---|---|---|
| LL-Y | LL-U | LL-V | LH-Y | LH-U | LH-V | HL-Y | HL-U | HL-V | HH-Y | HH-U | HH-V | Slice 0 |
| LL-Y | LL-U | LL-V | LH-Y | LH-U | LH-V | HL-Y | HL-U | HL-V | HH-Y | HH-U | HH-V | Slice 1 |
| LL-Y | LL-U | LL-V | LH-Y | LH-U | LH-V | HL-Y | HL-U | HL-V | HH-Y | HH-U | HH-V | Slice 2 |
| | | | | | | | | | | | | ...... |
| LL-Y | LL-U | LL-V | LH-Y | LH-U | LH-V | HL-Y | HL-U | HL-V | HH-Y | HH-U | HH-V | Slice slice_count-1 |

width * 4

height / 2

FIG. 2

14

block_height

block_width

1st block group

| block 0 | block 1 | ... | block M-1 |

2nd block group

| block 0 | block 1 | ... | block M-1 |

...

Last block group

| block 0 | block 1 | ... | block M-1 |

FIG. 3

| 0 | 1 | 4 | 5 | 16 | 17 | 20 | 21 | 64 | 65 | 68 | 69 | 80 | 81 | 84 | 85 |
|---|---|---|---|----|----|----|----|----|----|-----|-----|-----|-----|-----|-----|
| 2 | 3 | 6 | 7 | 18 | 19 | 22 | 23 | 66 | 67 | 70 | 71 | 82 | 83 | 86 | 87 |
| 8 | 9 | 12 | 13 | 24 | 25 | 28 | 29 | 72 | 73 | 76 | 77 | 88 | 89 | 92 | 93 |
| 10 | 11 | 14 | 15 | 26 | 27 | 30 | 31 | 74 | 75 | 78 | 79 | 90 | 91 | 94 | 95 |
| 32 | 33 | 36 | 37 | 48 | 49 | 52 | 53 | 96 | 97 | 100 | 101 | 112 | 113 | 116 | 117 |
| 34 | 35 | 38 | 39 | 50 | 51 | 54 | 55 | 98 | 99 | 102 | 103 | 114 | 115 | 118 | 119 |
| 40 | 41 | 44 | 45 | 56 | 57 | 60 | 61 | 104 | 105 | 108 | 109 | 120 | 121 | 124 | 125 |
| 42 | 43 | 46 | 47 | 58 | 59 | 62 | 63 | 106 | 107 | 110 | 111 | 122 | 123 | 126 | 127 |
| 128 | 129 | 132 | 133 | 144 | 145 | 148 | 149 | 192 | 193 | 196 | 197 | 208 | 209 | 212 | 213 |
| 130 | 131 | 134 | 135 | 146 | 147 | 150 | 151 | 194 | 195 | 198 | 199 | 210 | 211 | 214 | 215 |
| 136 | 137 | 140 | 141 | 152 | 153 | 156 | 157 | 200 | 201 | 204 | 205 | 216 | 217 | 220 | 221 |
| 138 | 139 | 142 | 143 | 154 | 155 | 158 | 159 | 202 | 203 | 206 | 207 | 218 | 219 | 222 | 223 |
| 160 | 161 | 164 | 165 | 176 | 177 | 180 | 181 | 224 | 225 | 228 | 229 | 240 | 241 | 244 | 245 |
| 162 | 163 | 166 | 167 | 178 | 179 | 182 | 183 | 226 | 227 | 230 | 231 | 242 | 243 | 246 | 247 |
| 168 | 169 | 172 | 173 | 184 | 185 | 188 | 189 | 232 | 233 | 236 | 237 | 248 | 249 | 252 | 253 |
| 170 | 171 | 174 | 175 | 186 | 187 | 190 | 191 | 234 | 235 | 238 | 239 | 250 | 251 | 254 | 255 |

FIG. 4

| | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|
| 0 | 1 | 4 | 5 | 16 | 17 | 20 | 21 | 64 | 65 | 68 | 69 | 80 | 81 | 84 | 85 | 128 | 129 | 132 | 133 | 144 | 145 | 148 | 149 | 192 | 193 | 196 | 197 | 208 | 209 | 212 | 213 |
| 2 | 3 | 6 | 7 | 18 | 19 | 22 | 23 | 66 | 67 | 70 | 71 | 82 | 83 | 86 | 87 | 130 | 131 | 134 | 135 | 146 | 147 | 150 | 151 | 194 | 195 | 198 | 199 | 210 | 211 | 214 | 215 |
| 8 | 9 | 12 | 13 | 24 | 25 | 28 | 29 | 72 | 73 | 76 | 77 | 88 | 89 | 92 | 93 | 136 | 137 | 140 | 141 | 152 | 153 | 156 | 157 | 200 | 201 | 204 | 205 | 216 | 217 | 220 | 221 |
| 10 | 11 | 14 | 15 | 26 | 27 | 30 | 31 | 74 | 75 | 78 | 79 | 90 | 91 | 94 | 95 | 138 | 139 | 142 | 143 | 154 | 155 | 158 | 159 | 202 | 203 | 206 | 207 | 218 | 219 | 222 | 223 |
| 32 | 33 | 36 | 37 | 48 | 49 | 52 | 53 | 96 | 97 | 100 | 101 | 112 | 113 | 116 | 117 | 160 | 161 | 164 | 165 | 176 | 177 | 180 | 181 | 224 | 225 | 228 | 229 | 240 | 241 | 244 | 245 |
| 34 | 35 | 38 | 39 | 50 | 51 | 54 | 55 | 98 | 99 | 102 | 103 | 114 | 115 | 118 | 119 | 162 | 163 | 166 | 167 | 178 | 179 | 182 | 183 | 226 | 227 | 230 | 231 | 242 | 243 | 246 | 247 |
| 40 | 41 | 44 | 45 | 56 | 57 | 60 | 61 | 104 | 105 | 108 | 109 | 120 | 121 | 124 | 125 | 168 | 169 | 172 | 173 | 184 | 185 | 188 | 189 | 232 | 233 | 236 | 237 | 248 | 249 | 252 | 253 |
| 42 | 43 | 46 | 47 | 58 | 59 | 62 | 63 | 106 | 107 | 110 | 111 | 122 | 123 | 126 | 127 | 170 | 171 | 174 | 175 | 186 | 187 | 190 | 191 | 234 | 235 | 238 | 239 | 250 | 251 | 254 | 255 |

FIG. 5

| 0 | 1 | 4 | 5 | 16 | 17 | 20 | 21 | 32 | 33 | 36 | 37 | 48 | 49 | 52 | 53 |
|----|----|----|----|----|----|----|----|----|----|----|----|----|----|----|----|
| 2 | 3 | 6 | 7 | 18 | 19 | 22 | 23 | 34 | 35 | 38 | 39 | 50 | 51 | 54 | 55 |
| 8 | 9 | 12 | 13 | 24 | 25 | 28 | 29 | 40 | 41 | 44 | 45 | 56 | 57 | 60 | 61 |
| 10 | 11 | 14 | 15 | 26 | 27 | 30 | 31 | 42 | 43 | 46 | 47 | 58 | 59 | 62 | 63 |

FIG. 6

FIG. 7

FIG. 8

FIG. 9

## INTERNATIONAL SEARCH REPORT

| International application No. |
| --- |
| **PCT/CN2024/119542** |

| A. | CLASSIFICATION OF SUBJECT MATTER |
| --- | --- |

H04N 19/30(2014.01)i;  H04N 19/63(2014.01)i

According to International Patent Classification (IPC) or to both national classification and IPC

| B. | FIELDS SEARCHED |
| --- | --- |

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 编码, 模式, 变长, 定长, 非零, 空洞, z编码, code, coding, pattern, mode, model, non zero, z coding, VLC, variable length, variable width, fixed length

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116962712 A (CHENGDU SOBEY DIGITAL TECHNOLOGY CO., LTD.) 27 October 2023 (2023-10-27) entire document | 1-3 |
| A | CN 113271467 A (CHENGDU SOBEY DIGITAL TECHNOLOGY CO., LTD.) 17 August 2021 (2021-08-17) entire document | 1-3 |
| A | CN 114143557 A (CHENGDU SOBEY DIGITAL TECHNOLOGY CO., LTD.) 04 March 2022 (2022-03-04) entire document | 1-3 |
| A | CN 102006483 A (ZTE CORP.) 06 April 2011 (2011-04-06) entire document | 1-3 |
| A | KR 20070029776 A (SAMSUNG ELECTRONICS CO., LTD.) 14 March 2007 (2007-03-14) entire document | 1-3 |
| A | US 2009097548 A1 (QUALCOMM INC.) 16 April 2009 (2009-04-16) entire document | 1-3 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 January 2025** | **09 January 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/119542**

| Patent document cited in search report | | | Publication date (day/month/year) | Patent family member(s) | | | Publication date (day/month/year) |
|---|---|---|---|---|---|---|---|
| CN | 116962712 | A | 27 October 2023 | CN | 116962712 | B | 12 December 2023 |
| CN | 113271467 | A | 17 August 2021 | CN | 113271467 | B | 17 August 2021 |
| CN | 114143557 | A | 04 March 2022 | CN | 114143557 | B | 07 July 2023 |
| CN | 102006483 | A | 06 April 2011 | CN | 102006483 | B | 06 April 2011 |
| KR | 20070029776 | A | 14 March 2007 | | None | | |
| US | 2009097548 | A1 | 16 April 2009 | US | 8848787 | B2 | 30 September 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111596903